# EUROPÄISCHE PATENTSCHRIFT

(11) **EP 3 545 185 B1**
(45) Veröffentlichungstag und Bekanntmachung des Hinweises auf die Patenterteilung: **29.07.2020**
(21) Anmeldenummer: 17783431.4
(22) Anmeldetag: 04.10.2017
(51) Int. Cl.: F02M 21/02, F16K 31/06, F02M 35/10, F02M 63/00, F16K 3/02

(54) **VENTIL ZUM DOSIEREN EINES GASES**
GAS DOSING VALVE
VALVE DE DOSAGE DE GAZ

(30) Priorität: 28.11.2016 DE 102016223536
(43) Veröffentlichungstag der Anmeldung: 02.10.2019
(73) Patentinhaber: Robert Bosch GmbH, 70442 Stuttgart (DE)
(72) Erfinder: HAWA, Niki, 4073 Wilhering (AT); HAINBERGER, Martin, 4020 Linz (AT); SCHMITZBERGER, Markus, 4073 Wilhering (AT); RAMMERSTORFER, Helmut, 4102 Goldwörth (AT)
(86) Internationale Anmeldenummer: PCT/EP2017/075152
(87) Internationale Veröffentlichungsnummer: WO 2018/095625

(56) Entgegenhaltungen:
- DE-A1-102014 205 496
- DE-A1-102014 219 019
- DE-A1-102015 206 206
- DE-B- 1 169 242

## Beschreibung

Die Erfindung betrifft ein Ventil zum Dosieren eines Gases, wie es vorzugsweise zum Dosieren von Gasen und gasförmigen Kraftstoffen Verwendung findet.

### Stand der Technik

Ventile zum Dosieren von Gasen sind aus dem Stand der Technik, beispielsweise aus der DE 10 2014 226 421 A1, bekannt. Solche Gasventile werden vorzugsweise verwendet, um gasförmige Kraftstoffe zu dosieren, die einer Brennkraftmaschine zugeführt werden sollen. Dabei muss der gasförmige Kraftstoff abgestimmt auf die Bewegung des Kolbens zum richtigen Zeitpunkt und in der richtigen Dosierung in den jeweiligen Brennraum eingebracht werden. Da gasförmige Kraftstoffe eine geringe Dichte aufweisen, muss eine vergleichsweise große Menge eingedüst werden, um die entsprechende Energiemenge im Brennraum zur Verfügung zu haben. Die bekannten Gasventile weisen deshalb relativ große Eindüsöffnungen auf, wobei zur Steuerung der Eindüsöffnungen ein beweglicher Ventilteller dient, der innerhalb des Ventils angeordnet ist und der entgegen der Kraft einer Schließfeder durch einen Elektromagneten in Längsrichtung bewegbar ist. Der Ventilteller wirkt dabei mit einer Ventildichtfläche zusammen und öffnet und schließt bei seiner Bewegung mehrere Eindüsöffnungen, durch die der gasförmige Kraftstoff oder ein anderes Gas ausgedüst wird.

Der Ventilteller ist vorzugsweise flach ausgebildet und wird bei Bestromung des Elektromagneten von der Ventildichtfläche weggezogen, bis er an einem Anschlag zur Anlage kommt. Dieser Anschlag kann verschieden ausgebildet sein: Entweder am Magnetanker oder auch am Ventilteller, was insbesondere dann von Vorteil ist, wenn der Maximalhub des Ventiltellers genau eingestellt werden soll, um für ein exaktes Dosieren einen bestimmten Durchströmquerschnitt aufzusteuern. Der Ventilteller kommt dabei an einer Kontaktkante zur Anlage, da ein genau planes Aufsetzen des Ventiltellers auf einer ebenso planen Anschlagfläche fertigungstechnisch praktisch nicht zu erreichen ist, zumal durch die Beweglichkeit des Magnetankers stets eine leichte Schiefstellung möglich ist. Dementsprechend kommt es immer in einem Teilbereich der Anschlagsfläche zum ersten Kontakt und damit zur Ausbildung einer Kontaktkante, an der eine erhöhte mechanische Belastung auftritt. Daraus resultiert eine lokal hohe Flächenpressung an dieser Kontaktkante, was über die Laufzeit des Ventils zu Verschleiß führt und damit zu einer Vergrößerung des freigegebenen Querschnitts und damit der eingedüsten Gasmenge.

Weitere Ventile zum Dosieren von Gasen sind aus DE102014219019 A1, DE102015206206 A1 und DE102014205496 A1 bekannt.

### Vorteile der Erfindung

Das erfindungsgemäße Ventil zum Dosieren eines gasförmigen Kraftstoffs weist demgegenüber den Vorteil auf, dass die Belastung im Bereich der Kontaktkante reduziert ist und damit das Gasventil über die gesamte Lebensdauer eine exakte Zumessung von gasförmigem Kraftstoff erlaubt. Dazu weist das Ventil zum Dosieren eines Gases ein Gehäuse auf, in dem ein Ventilteller längsbeweglich angeordnet ist mit einer daran ausgebildeten Dichtfläche, die mit einer Ventilsitzfläche zum Öffnen und Schließen wenigstens einer Durchlassöffnung für das dosierende Gas zusammenwirkt. Dabei kommt der Ventilteller mit seiner der Dichtfläche gegenüberliegenden Fläche in seiner Öffnungsstellung an einer Anschlagfläche zur Anlage. An der Anschlagfläche ist eine flexible Kontaktkante ausgebildet. Durch die Ausbildung der flexiblen Kontaktkante, an der der Ventilteller zur Anlage kommt, wird gezielt die Flächenpressung und damit die mechanische Belastung im Bereich der Kontaktkante reduziert, was wiederum den Verschleiß reduziert und damit den maximalen Hub des Ventiltellers konstant hält über die gesamte Lebensdauer. Da der Maximalhub den größten Durchflussquerschnitt und damit den Durchflusswiderstand des gasförmigen Kraftstoffs definiert, kann so eine konstante Dosierung des gasförmigen Kraftstoffs sichergestellt werden. Dabei ist die Anschlagfläche an einer im Gehäuse angeordneten Anschlagscheibe ausgebildet, die eine zentrale Öffnung aufweist, wobei die flexible Kontaktkante im Bereich der zentralen Öffnung ausgebildet ist. Die zentrale Öffnung der Anschlagscheibe dient vorzugsweise der Durchleitung des gasförmigen Kraftstoffs bzw. des Gases, welches mit dem Ventil dosiert werden soll, wodurch es am Übergang der Anschlagscheibe zu der zentralen Öffnung stets zu der Bildung einer Kante kommt, an der entsprechend hohe mechanische Belastungen auftreten. Ist die flexible Kontaktkante im Bereich der zentralen Öffnung ausgebildet, so wird genau dieser hochbelastete Bereich besser geschützt und die Lebensdauer des Ventils erhöht sich entsprechend.

In der zentralen Öffnung der Anschlagscheibe ist eine umlaufende Ringnut ausgebildet. Durch diese Ringnut wird in vorteilhafter Weise ein Ringsteg gebildet, an der die flexible Kontaktkante ausgebildet ist. Durch die Tiefe und die Nähe der Ringnut zu den Seitenflächen der Anschlagscheibe kann die Flexibilität der Kontaktkante eingestellt werden, so dass die gewünschte mechanische Schwächung eintritt.

In einer vorteilhaften Ausgestaltung ist der Ventilteller mit einem Magnetanker verbunden, der mit einem Elektromagneten zusammenwirkt. Dadurch kann der Magnetanker durch das Bestromen des Elektromagneten bewegt werden und dieser bewegt dann entsprechend den Ventilteller, so dass auf diese Weise eine Längsbewegung des Ventiltellers ausgeführt werden kann.

In einer weiteren vorteilhaften Ausgestaltung weist die Anschlagscheibe in der zentralen Öffnung den Magnetanker auf, was einen platzsparenden Aufbau des Ventils ermöglicht.

In einer weiteren vorteilhaften Ausgestaltung sind im Ventilteller ringförmige Öffnungen ausgebildet, durch die das zu dosierende Gas zu den Durchlassöffnungen strömen kann. Ringförmige Öffnungen mit den dazwischen verbleibenden Stegen ergeben die Möglichkeit, durch eine relativ geringe Bewegung des Ventiltellers einen großen Strömungsquerschnitt freizuschalten bzw. zu verschließen, um dadurch den gewünschten und notwendigen großen Durchflussquerschnitt zur Verfügung zu stellen bei einer ausreichend hohen Stabilität des Ventiltellers.

In einer weiteren vorteilhaften Ausgestaltung wird der Ventilteller durch eine oder mehrere Schließfedern mit einer Schließkraft in Richtung der Ventilsitzfläche beaufschlagt. Dadurch ist sichergestellt, dass der Ventilteller die Durchlassöffnungen immer verschließt, wenn der Elektromagnet nicht bestromt ist, also insbesondere dann, wenn das Ventil abgeschaltet ist.

### Zeichnung

In der Zeichnung ist ein Ausführungsbeispiel des erfindungsgemäßen Ventils dargestellt. Es zeigt
- Figur 1: einen Längsschnitt durch ein erfindungsgemäßes Ventil, wobei nur die wesentlichen Komponenten dargestellt sind,
- Figur 2a: eine Ausschnittsvergrößerung im Bereich der flexiblen Kontaktkante gemäß dem Stand der Technik und
- Figur 2b: dieselbe Ausschnittsvergrößerung wie Figur 2a in einer erfindungsgemäßen Ausführung.

### Beschreibung des Ausführungsbeispiels

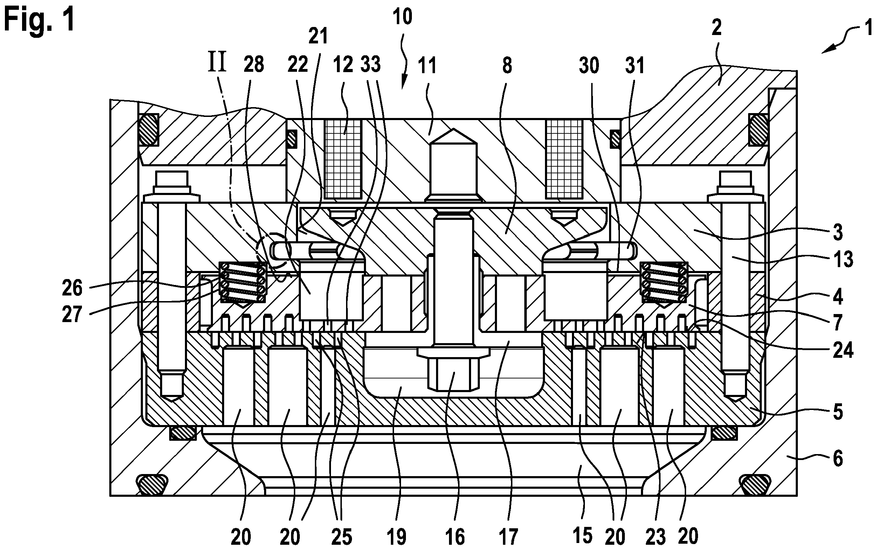

In **Figur 1** ist ein erfindungsgemäßes Ventil zum Dosieren eines Gases im Längsschnitt dargestellt. Das Ventil weist ein Gehäuse 1 auf, das einen Haltekörper 2 umfasst, der mit einer Ventilsitzplatte 5 über eine Spannhülse 6 verbunden ist. In der Spannhülse 6 ist an dem in der Zeichnung unteren Ende eine Austrittsöffnung 15 ausgebildet, über die das zu dosierende Gas aus dem Ventil austritt. Zwischen dem Haltekörper 2 und der Ventilsitzplatte 5 ist weiterhin eine Distanzscheibe 4 und eine Anlagescheibe 3 angeordnet, die durch mehrere Spannstifte 13 gegeneinander verspannt sind und dadurch einen festen Verbund bilden. Der Verbund aus der Anlagescheibe 3 der Distanzscheibe 4 und der Ventilsitzplatte 5 wird über die Spannhülse 6 gegen einen Elektromagneten 10 verspannt, der im Inneren des Haltekörpers 2 angeordnet ist. Dadurch sind sämtliche Komponenten, also der Elektromagnet 10, die Anschlagscheibe 3, die Distanzscheibe 4 und die Ventilsitzplatte 5, ortsfest im Gehäuse 1 fixiert.

Der Elektromagnet 10 besteht aus einem Magnetkern 11 und einer Magnetspule 12, die innerhalb des Magnetkerns 11 angeordnet ist. Durch Bestromung der Magnetspule 12 wird so eine magnetische Kraft auf einen Magnetanker 8 ausgeübt wird, der in einer zentralen Öffnung 21 der Anschlagscheibe 3 beweglich angeordnet ist. Der Magnetanker 8 ist mit einer Ventilplatte 7 fest verbunden, wobei die Verbindung durch einen Bolzen 16 hergestellt wird, der zentral innerhalb des Magnetankers 8 und des Ventiltellers 7 angeordnet ist und der unter Zwischenlage eines Halteelements 17 den Ventilteller 7 gegen den Magnetanker 8 verspannt.

In der Ventilsitzplatte 5 sind mehrere Durchlassöffnungen 20 ausgebildet, die als Bohrungen ausgebildet sind und die mit ringförmigen Öffnungen 25 an der Oberseite der Ventilsitzplatte 5 verbunden sind. Die ringförmigen Öffnungen 25, zwischen denen jeweils ein Steg verbleibt und die in der Figur 1 nur im Querschnitt zu sehen sind, bieten einen großen Durchflussquerschnitt, durch den das zu dosierende Gas über die ringförmigen Öffnungen 25 in die Durchlassöffnungen 20 strömen kann. Dies ist insbesondere dann wichtig, wenn eine große Menge Gas bzw. gasförmiger Kraftstoff dosiert werden soll. Um diese Durchlassöffnungen 20 bzw. die ringförmigen Öffnungen 25 zu öffnen und zu schließen dient der Ventilteller 7, dessen der Ventilsitzplatte 5 zugewandte Seite als Dichtfläche 23 ausgebildet ist. Auch im Ventilteller 7 sind ringförmige Öffnungen 33 ausgebildet, die gegenüber den ringförmigen Öffnungen 25 der Ventilsitzplatte 5 versetzt angeordnet sind, so dass die ringförmigen Öffnungen 33 auf den Stegen zur Anlage kommen, die zwischen den ringförmigen Öffnungen 25 der Ventilsitzplatte 5 verbleiben. Damit werden die ringförmigen Öffnungen 25 in der Ventilsitzplatte 5 verschlossen, sobald der Ventilteller 7 auf der Ventilsitzplatte 5 aufliegt. Zur weiteren Durchleitung des gasförmigen Kraftstoffs bzw. des zu dosierenden Gases dienen Gasdurchlässe 22, die im Ventilteller 7 ausgebildet sind und die mit den ringförmigen Öffnungen 33 verbunden sind.

Ist der Ventilteller 7 in Anlage auf der Ventilsitzfläche 24 der Ventilsitzplatte 5, so verbleibt zwischen der Anschlagscheibe 3 und dem Ventilteller 7 eine Lücke, die den maximalen Hub des Ventiltellers 7 definiert. Dabei wird der Ventilteller 7 von der Kraft mehrerer Schließfedern 26 in Richtung der Ventilsitzplatte 5 mit einer Schließkraft beaufschlagt, wobei die Schließfedern 26 in Aufnahmen 27 im Ventilteller 7 aufgenommen sind. Soll Gas eindosiert werden, so wird der Elektromagnet 10 bestromt und zieht den Magnetanker 8 in Richtung des Elektromagneten 10. Dadurch wird auch der Ventilteller 7 von der Ventilsitzplatte 5 weggezogen, so dass nunmehr Gas durch die Gasdurchlässe 22, die ringförmigen Öffnungen 33, die weiteren ringförmigen Öffnungen 25 und die Durchlassöffnungen 20 in die Austrittsöffnung 15 strömen kann. Die Bewegung des Ventiltellers 7 wird so lange fortgesetzt und damit auch die Bewegung des Magnetankers 8, bis der Ventilteller 7 an der Anschlagfläche 28 der Anschlagscheibe 3 zur Anlage kommt. Der durch diesen maximalen Hub definierte Öffnungsquerschnitt, der zwischen dem Ventilteller 7 und der Ventilsitzplatte 5 verbleibt, definiert den möglichen Fließquerschnitt des Gases bzw. des gasförmigen Kraftstoffs, was bei einem konstanten Druck des Gases ein genaues Dosieren ermöglicht, indem das Ventil eine bestimmte Dauer geöffnet und anschließend wieder geschlossen wird.

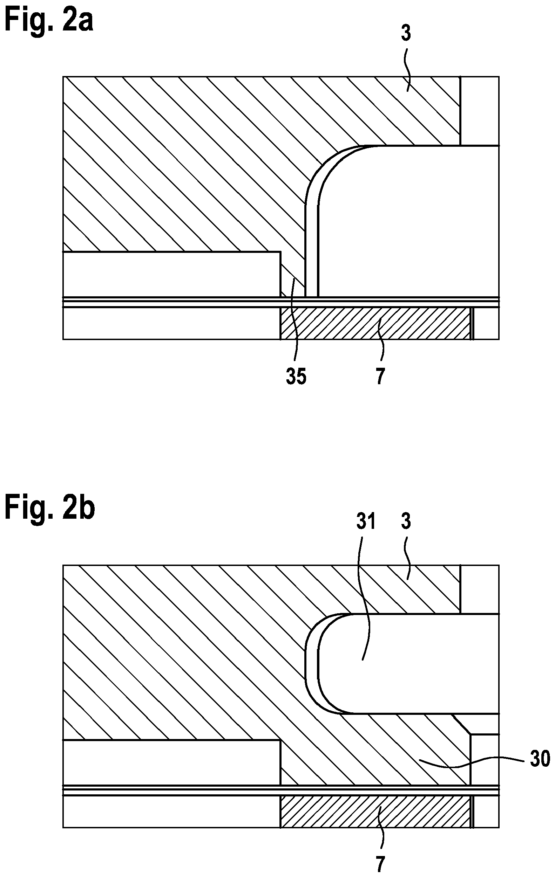

Am Übergang zur zentralen Öffnung 21 innerhalb der Anschlagscheibe 3 ist eine flexible Kontaktkante 30 ausgebildet. Bedingt durch die Kraft, die der Magnetanker 8 auf den Ventilteller 7 ausübt, sitzt der Ventilteller 7 bedingt durch die stets leichte Schiefstellung gegenüber der Anschlagscheibe 3 zuerst auf einer Seite der Kontaktkante 30 auf, so dass an dieser Stelle die höchste mechanische Belastung zwischen dem Ventilteller 7 und der Anschlagscheibe 3 auftritt. Um die flexible Kontaktkante 30 auszubilden, ist eine Ringnut 31 an der Innenseite der zentralen Öffnung 21 ausgebildet. Über die Dicke und Breite der Ringnut 31 und den Abstand zur Anschlagfläche 28 lässt sich die Flexibilität der flexiblen Kontaktkante 30 einstellen. Da die flexible Kontaktkante 30 leicht nachgibt, wenn der Ventilteller 7 in Anlage an die Anschlagscheibe 3 kommt, werden mechanische Überbeanspruchungen an dieser Stelle reduziert, was den Verschleiß reduziert und entsprechend die Lebensdauer des Ventils erhöht. In **Figur 2a** ist dazu eine Ausschnittsvergrößerung im Bereich der flexiblen Kante gezeigt, wobei Figur 2a den aus dem Stand der Technik bekannten Zustand darstellt, bei dem eine starre Kante am Übergang zur zentralen Öffnung innerhalb der Anschlagscheibe 3 ausgebildet ist, und **Figur 2b** die erfindungsgemäße Ausgestaltung der flexiblen Kontaktkante 30 beim erfindungsgemäßen Ventil, wobei dieser Abschnitt in Fig. 1 mit II bezeichnet ist.

Die Steifigkeit bzw. Nachgiebigkeit der flexiblen Kontaktkante 30 muss an die zu erwartende Auftreffgeschwindigkeit des Ventiltellers 7 angepasst werden, was durch Versuche oder durch Berechnung und entsprechende Ausgestaltung der Ringnut 31 geschehen kann. Neben der gezeigten Gestalt der Ringnut 31 sind auch andere Ausgestaltungen der Ringnut 31 möglich, sofern die notwendige Flexibilität an der flexiblen Kontaktkante erreicht wird, die einerseits genügend Festigkeit aufweist und andererseits genügend Flexibilität, um den Belastungen standzuhalten. Dabei ist es auch möglich, die flexible Kontaktkante 31 aus einem anderen Material als die restliche Anschlagscheibe zu fertigen, um so über die geeignete Materialwahl die notwendige Flexibilität zu erreichen.

## Patentansprüche

1. Ventil zum Dosieren eines Gases, insbesondere eines gasförmigen Kraftstoffs, mit einem Gehäuse (1), in dem ein Ventilteller (7) längsbeweglich angeordnet ist, an dem eine Dichtfläche (23) ausgebildet ist, die mit einer Ventilsitzfläche (24) zum Öffnen und Schließen wenigstens einer Durchlassöffnung (20) für das zu dosierende Gas zusammenwirkt, wobei der Ventilteller (7) mit einer der Dichtfläche (23) gegenüberliegenden Fläche in reiner Öffnungsstellung an einer Anschlagfläche (28) zur Anlage kommt, wobei an der Anschlagfläche (28) eine flexible Kontaktkante (30) ausgebildet ist, wobei die Anschlagfläche (28) an einer im Gehäuse (1) angeordneten Anschlagscheibe (3) ausgebildet ist, die eine zentrale Öffnung (21) aufweist, wobei die flexible Kontaktkante (30) im Bereich der zentralen Öffnung (21) ausgebildet ist,
**dadurch gekennzeichnet, dass** in der zentralen Öffnung (21) der Anschlagscheibe (3) eine umlaufende Ringnut (31) ausgebildet ist, durch die ein Ringsteg gebildet wird, an der die flexible Kontaktkante (30) ausgebildet ist.

2. Ventil nach Anspruch 1, **dadurch gekennzeichnet, dass** der Ventilteller (7) mit einem Magnetanker (8) verbunden ist, der mit einem Elektromagneten (10) zusammenwirkt.

3. Ventil nach Anspruch 2, **dadurch gekennzeichnet, dass** der Magnetanker (8) in der zentralen Öffnung (21) der Anschlagscheibe (3) angeordnet ist.

4. Ventil nach Anspruch 1, **dadurch gekennzeichnet, dass** im Ventilteller (7) ringförmige Öffnungen (33) ausgebildet sind, durch die das zu dosierende Gas zu den Durchlassöffnungen (20) strömen kann.

5. Ventil nach Anspruch 1, **dadurch gekennzeichnet, dass** der Ventilteller (7) durch eine Schließfeder (26) oder mehrere Schließfedern (26) mit einer Schließkraft in Richtung der Ventilsitzfläche (24) beaufschlagt ist.

## Claims

1. Valve for dosing a gas, in particular a gaseous fuel, having a housing (1) in which a valve plate (7) is arranged in a longitudinally movable manner, on which valve plate there is formed a sealing surface (23) which interacts with a valve seat surface (24) for the purpose of opening and closing at least one passage opening (20) for the gas to be dosed, wherein, in an open position, the valve plate (7) comes to bear, with a surface opposite the sealing surface (23), against a stop surface (28), wherein a flexible contact edge (30) is formed on the stop surface (28), wherein the stop surface (28) is formed on a stop disc (3) which is arranged in the housing (1) and which has a central opening (21), wherein the flexible contact edge (30) is formed in the region of the central opening (21), **characterized in that** an encircling annular groove (31) is formed in the central opening (21) of the stop disc (3), by way of which annular groove there is formed an annular web on which the flexible contact edge (30) is formed.

2. Valve according to Claim 1, **characterized in that** the valve plate (7) is connected to a magnet armature (8) which interacts with an electromagnet (10) .

3. Valve according to Claim 2, **characterized in that** the magnet armature (8) is arranged in the central opening (21) of the stop disc (3).

4. Valve according to Claim 1, **characterized in that**, in the valve plate (7), there are formed annular openings (33) through which the gas to be dosed can flow to the passage openings (20).

5. Valve according to Claim 1, **characterized in that** the valve plate (7) is subjected to a closing force in the direction of the valve seat surface (24) by way of a closing spring (26) or multiple closing springs (26).

## Revendications

1. Soupape de dosage d'un gaz, en particulier d'un carburant gazeux, comprenant un boîtier (1) dans lequel est disposé, de manière déplaçable longitudinalement, un plateau de soupape (7), au niveau duquel est réalisée une surface d'étanchéité (23) qui coopère avec une surface de siège de soupape (24) pour l'ouverture et la fermeture d'au moins une ouverture de passage (20) pour le gaz à doser, le plateau de soupape (7) venant en appui avec une surface opposée à la surface d'étanchéité (23) dans une position d'ouverture contre une surface de butée (28), une arête de contact flexible (30) étant réalisée au niveau de la surface de butée (28), la surface de butée (28) étant réalisée au niveau d'un disque de butée (3) disposé dans le boîtier (1) qui présente une ouverture centrale (21), l'arête de contact flexible (30) étant réalisée dans la région de l'ouverture centrale (21),
**caractérisée en ce qu'**une rainure annulaire périphérique (31) est réalisée dans l'ouverture centrale (21) du disque de butée (3), par laquelle est formée une nervure annulaire au niveau de laquelle est réalisée l'arête de contact flexible (30) .

2. Soupape selon la revendication 1, **caractérisée en ce que** le plateau de soupape (7) est connecté à un induit magnétique (8) qui coopère avec un électroaimant (10).

3. Soupape selon la revendication 2, **caractérisée en ce que** l'induit magnétique (8) est disposé dans l'ouverture centrale (21) du disque de butée (3).

4. Soupape selon la revendication 1, **caractérisée en ce que** des ouvertures annulaires (33) sont réalisées dans le plateau de soupape (7), à travers lesquelles le gaz à doser peut s'écouler vers les ouvertures de passage (20).

5. Soupape selon la revendication 1, **caractérisée en ce que** le plateau de soupape (7) est sollicité par un ressort de fermeture (26) ou par plusieurs ressorts de fermeture (26) avec une force de fermeture dans la direction de la surface de siège de soupape (24).
